# EUROPÄISCHE PATENTANMELDUNG

(11) **EP 1 469 211 A1**
(43) Veröffentlichungstag der Anmeldung: **20.10.2004**
(21) Anmeldenummer: 03026494.9
(22) Anmeldetag: 21.11.2003
(51) Int. Cl.: F16C 19/52, F16C 33/78, G01P 3/44, G01P 3/487, F16J 15/32

(54) **Dichtungsanordnung mit einem Multipolring**

(30) Priorität: 16.04.2003 DE 10317782
(71) Anmelder: Carl Freudenberg KG, 69469 Weinheim (DE)
(72) Erfinder: von Geisau, Markus, 68259 Mannheim (DE); Henrich, Uwe, 69502 Weinheim (DE); Penoty, Pascal, 86100 Chatellersault (FR)

(57) **Zusammenfassung**

Dichtungsanordnung zwischen einem feststehenden Träger und einem drehbaren Gehäuse mit einem am Gehäuse befestigten Dichtelement, das einen Multipolring sowie eine statische und eine dynamische Dichtung hat, wobei der Träger (2) mit einem Laufring (13) als Gegenlauffläche (12) für die dynamische Dichtung (7) versehen ist.

## Beschreibung

### Technisches Gebiet

Die Erfindung befasst sich mit einer zwischen einem feststehenden Träger und einem drehbaren Gehäuse einfügbaren Dichtungsanordnung mit einem am Gehäuse befestigten Dichtelement, das einen Multipolring sowie eine statische und eine dynamische Dichtung hat.

### Stand der Technik

In der DE 195 03 468 C1 ist eine Dichtungsanordnung beschrieben, die bei einem Radlager eingesetzt werden kann und die sowohl Dichtungsfunktionen als auch eine Erfassung der Drehzahl des Fahrzeugrads über den mit einem Sensor zusammenwirkenden Multipolring ermöglicht. Dichtungsanordnungen dieser Art haben eine vielseitige Verwendung gefunden.

In der DE 195 03 469 C1 ist eine vergleichbare Dichtungsanordnung beschrieben, mit dem Unterschied, dass als Multipolring eine Zwischenschicht verwendet wird, die von dem zu Dichtzwecken herangezogenen Elastomer vollständig überdeckt ist.

### Darstellung der Erfindung

Ausgehend von dem oben genannten Stand der Technik liegt der Erfindung die Aufgabe zugrunde, eine Dichtungsanordnung zu finden, die einfach in ihrem Aufbau ist, mit geringem Montageaufwand montiert werden kann und die eine höchstmögliche Einsatzdauer erlaubt.

Die Lösung der gestellten Aufgabe erfolgt bei einer Dichtungsanordnung der eingangs genannten Art erfindungsgemäß dadurch, dass der Träger mit einem Laufring als Gegenlauffläche für die dynamische Dichtung versehen ist. Bei dieser Lösung wird die vorteilhafte Ausbildung des Dichtelements mit einem Multipolring sowie statischer eine dynamischer Dichtung beibehalten, jedoch kann eine verbesserte Leistung der Dichtung dadurch erreicht werden, dass die Dichtung nicht mehr am Träger selbst anliegt, sondern an der durch einen Laufring gebildeten Gegenlauffläche. Diese Gegenlauffläche kann einer Bearbeitung unterzogen werden, beispielsweise durch Schleifen, Glätten oder dergleichen, so dass die dynamische Dichtung einem geringeren Verschleiß unterliegt. An sich ist eine solche Vorgehensweise bei Kassettendichtungen bekannt. Kassettendichtungen benötigen jedoch einen erheblichen Bauraum und sind deshalb nicht in allen Fällen einsetzbar. Die erfindungsgemäße Dichtung kann dagegen mit einem geringen Bauraum auskommen und ist darüber hinaus leicht am Gehäuse bzw. am Träger zu befestigen.

Um eine gute Dichtwirkung und auch um einen guten Schutz für die dynamische Dichtung zu erreichen, ist der Laufring mit einem radial nach außen gerichteten Schutzring versehen. Dieser Schutzring kann gleichzeitig auch mit seiner Innenseite als Dichtfläche für eine axial ausgerichtete Dichtlippe der dynamischen Dichtung dienen.

Das Dichtelement wird aus einem Stützring gebildet, an dessen radial innen liegendem Teil die dynamische Dichtung angebracht ist und an dessen radial außen liegendem Teil die statische Dichtung und der Multipolring angeordnet sind. Darüber hinaus kann der Stützring mit einem axial ausgerichteten zylindrischen Teil versehen sein, welches zur Befestigung des Dichtelements am Gehäuse herangezogen wird. Dabei kann das zylindrische Teil in die Gehäuseöffnung eingeschoben werden. möglich ist aber auch, das Gehäuse mit einer Buchse zu versehen, welche in das zylindrische Teil einschiebbar ist.

Für eine Reihe von Befestigungsvorgängen kann es günstig sein, dass der Multipolring als statische Dichtung zwischen dem zylindrischen Teil und dem Gehäuse oder der Buchse herangezogen wird. Der Multipolring selbst ist an sich in bekannter Weise aus einem magnetisierbaren Elastomerwerkstoff. Wenn der Multipolring auch als Dichtung herangezogen wird, so ist es günstig, wenn der Außenumfang des Multipolrings aus einem Elastomer besteht. Hierdurch wird ein weicher Außenumfang erreicht, der zu einer besseren Abdichtung führt, als der mit Ferritpartikeln versehene Elastomerwerkstoff.

Als dynamische Dichtung wird bevorzugt eine Lippendichtung eingesetzt, die aus einem geeigneten Elastomerwerkstoff hergestellt ist. Die Lippendichtung liegt radial dichtend am Laufring an. Von Vorteil ist, wenn die dynamische Dichtung zusätzlich mit einer axial dichtenden Lippe versehen wird, die an der Innenseite des Schutzrings zur Anlage kommt.

Die Dichtungsanordnung ist insofern leicht herstellbar, als die beiden unterschiedlichen Elastomerwerkstoffe für die dynamische Dichtung und für den Multipolring in einem Schritt gefertigt werden können, d.h. gleichzeitig an den Stützring anvulkanisiert werden können.

### Kurzbeschreibung der Zeichnungen

In der beiliegenden Zeichnung sind mehrere Ausführungsbeispiele dargestellt.

Es zeigen:
- Fig. 1:: eine Dichtungsanordnung im Längsschnitt mit einer innenseitig eingefügten Buchse;
- Fig. 2:: eine Dichtungsanordnung mit einer vergrößerten Encoderfläche und
- Fig. 3:: ein in eine Gehäuseöffnung eingesetzte Dichtungsanordnung.

### Ausführung der Erfindung

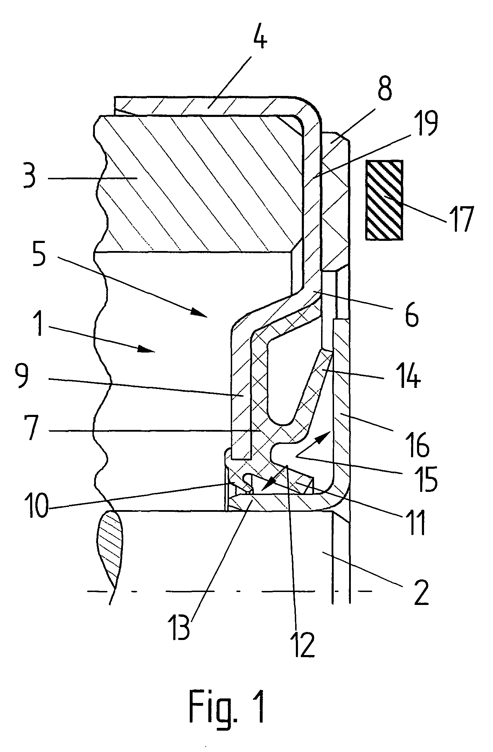

In der Fig. 1 ist eine Dichtungsanordnung 1 gezeigt, welche den Raum zwischen dem feststehenden Träger 2 und dem drehenden Gehäuse 3 abdichtet. Das Gehäuse 3 ist in diesem Fall mit einer in den zylindrischen Teil 4 des Dichtelements 5 einschiebbaren Buchse versehen. Der Träger 2 ist eine feststehende Welle. Das Dichtelement 5 besteht im Wesentlichen aus dem metallischen Stützring 6, der die Halterung für die dynamische Dichtung 7 sowie für den Multipolring 8 bildet. An dem radial innen liegenden Teil 9 des Stützrings 6 ist die dynamische Dichtung 7 anvulkanisiert. Die dynamische Dichtung 7 ist mit zwei Dichtlippen 10 und 11 versehen, die an der Lauffläche 12 des auf dem Träger 2 befestigten Laufrings 13 angedrückt werden. Außerdem hat die dynamische Dichtung 7 noch die axial dichtende Lippe 14, die an der Innenseite 15 des radial nach außen gerichteten und mit dem Laufring 13 eine Einheit bildenden Schutzrings 16 zur Anlage kommt. Der Multipolring 8 ist an dem radial außen liegenden Teil 19 des Stützrings 6 angebracht. Gegenüber dem Multipolring 8 befindet sich der Sensor 17, in dem je nach Drehzahl des Gehäuses 3 ein entsprechendes Signal erzeugt wird. Der Multipolring 8 selbst ist aus einem magnetisierbaren Elastomerwerkstoff hergestellt und an dem Stützring 6 anvulkanisiert.

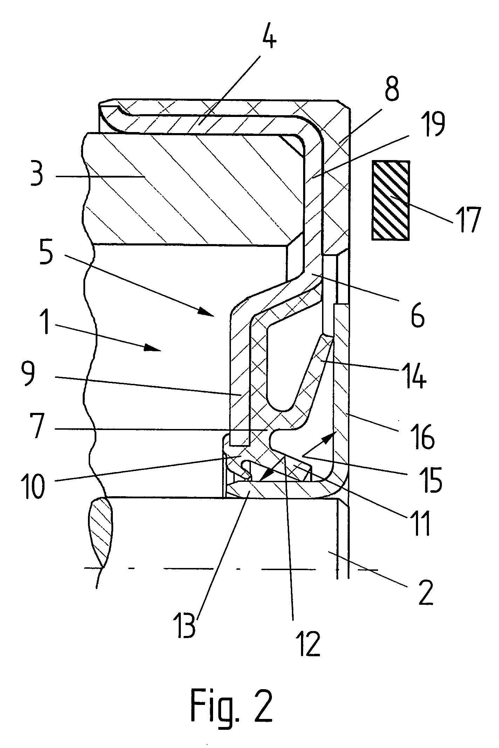

Die Fig. 2 zeigt im Längsschnitt eine Dichtungsanordnung 1, mit dem gleichen Aufbau, wie in der Fig. 1 gezeigt. Gleiche Bezugsziffern betreffen gleiche Teile aus Fig. 1. In diesem Fall ist jedoch der Multipolring auch über das zylindrische Teil 4 gezogen, was eine fertigungstechnische Vereinfachung darstellt.

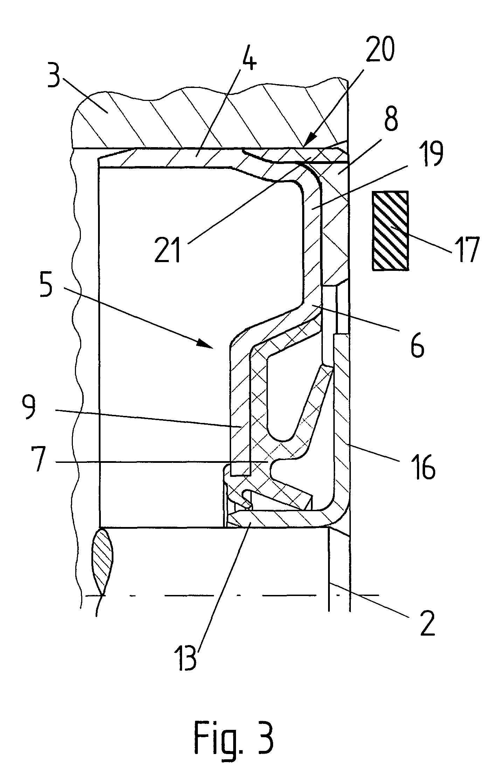

Auch die Fig. 3 enthält alle wesentlichen Elemente aus der Fig. 1, mit der Abweichung, dass der Multipolring 8 hier zur statischen Abdichtung 20 zwischen dem zylindrisch Teil 4 des Stützrings 6 und dem Gehäuse 3 herangezogen wird. In diesem Fall ist es günstig, wenn der Außenumfang 21 des Multipolrings 8 aus einem Elastomer gebildet wird, welches nicht mit Ferritpartikeln versehen ist.

## Patentansprüche

1. Dichtungsanordnung zwischen einem feststehenden Träger und einem drehbaren Gehäuse mit einem am Gehäuse befestigten Dichtelement, das einen Multipolring sowie eine statische und eine dynamische Dichtung hat, **dadurch gekennzeichnet, dass** der Träger (2) mit einem Laufring (13) als Gegenlauffläche (12) für die dynamische Dichtung (7) versehen ist.

2. Dichtungsanordnung nach Anspruch 1, **dadurch gekennzeichnet, dass** der Laufring (13) einen radialen nach außen gerichteten Schutzring (16) hat.

3. Dichtungsanordnung nach einem der Ansprüche 1 oder 2, **dadurch gekennzeichnet, dass** das Dichtelement (5) aus einem Stützring (6) besteht, an dessen radial innen liegendem Teil (9) die dynamische Dichtung (7) angebracht ist und an dessen radial außen liegendem Teil (19) die statische Dichtung (20) und der Multipolring (8) angeordnet sind.

4. Dichtungsanordnung nach einem der Ansprüche 1 bis 3, **dadurch gekennzeichnet, dass** der Stützring (6) ein axial ausgerichtetes zylindrisches Teil (4) hat, das zur Befestigung des Dichtelements (5) am Gehäuse (3) dient.

5. Dichtungsanordnung nach einem der Ansprüche 1 bis 4, **dadurch gekennzeichnet, dass** das Gehäuse (3) eine in das zylindrisch Teil (4) einschiebbare Buchse hat.

6. Dichtungsanordnung nach einem der Ansprüche 1 bis 4, **dadurch gekennzeichnet, dass** das zylindrische Teil (4) in die Gehäuseöffnung eingeschoben ist.

7. Dichtungsanordnung nach einem der Ansprüche 1 bis 6, **dadurch gekennzeichnet, dass** der Multipolring (8) als statische Dichtung (20) zwischen dem zylindrischen Teil (4) des Stützrings (6) und dem Gehäuse (3) oder der Buchse (3) dient.

8. Dichtungsanordnung nach einem der Ansprüche 1 bis 7, **dadurch gekennzeichnet, dass** die dynamische Dichtung (7) eine Lippendichtung (10,11) ist.

9. Dichtungsanordnung nach einem der Ansprüche 1 bis 8, **dadurch gekennzeichnet, dass** die dynamische Dichtung (7) eine axial dichtende Lippe (14) hat, die an der Innenseite (15) des Schutzrings (16) anliegt.

10. Dichtungsanordnung nach einem der Ansprüche 1 bis 9, **dadurch gekennzeichnet, dass** der Multipolring (8) aus einem magnetisierbaren Elastomerwerkstoff besteht.

11. Dichtungsanordnung nach einem der Ansprüche 1 bis 10, **dadurch gekennzeichnet, dass** der Außenumfang (21) des Multipolrings (8) aus einem Elastomer besteht.
